# FASCICULE DE BREVET EUROPEEN

(11) **EP 0 679 816 B1**
(45) Date de publication et mention de la délivrance du brevet: **24.06.1998**
(21) Numéro de dépôt: 95400602.9
(22) Date de dépôt: 20.03.1995
(51) Int. Cl.: F16C 7/02

(54) **Bielle de moteur à combustion interne**
Pleuelstange für Verbrennungsmotor
Connecting-rod for an internal combustion engine

(30) Priorité: 29.04.1994 FR 9405207
(43) Date de publication de la demande: 02.11.1995
(73) Titulaire: ASCOMETAL (Société anonyme), F-92800 Puteaux (FR)
(72) Inventeur: Genouille, Michel, F-91370 Verrieres le Buisson (FR)
(74) Mandataire: Ventavoli, Roger

(56) Documents cités:
- EP-A- 0 269 135
- EP-A- 0 598 664
- DE-A- 3 331 300
- FR-A- 718 435
- US-A- 3 877 350

## Description

La présente invention concerne une bielle, notamment de moteur à combustion interne, comportant un corps, un pied de bielle et une tête de bielle formant deux paliers destinés, chacun, à recevoir un axe d'articulation, ladite bielle étant constituée de deux éléments, sensiblement symétriques par rapport à un plan médian longitudinal de la bielle, leur surface de jointure étant essentiellement disposée dans le plan médian, lesdits éléments qui portent chacun un demi-palier de pied de bielle et un demi-palier de tête de bielle étant liés entre eux par au moins un moyen d'immobilisation ménagé sur le corps de la bielle.

Il est connu de la demande de brevet français n° 92 13 859 une bielle comportant un corps, un pied de bielle et une tête de bielle formant des paliers cylindriques, destinés à recevoir un axe d'articulation. La bielle est constituée de deux éléments forgés qui sont assemblés l'un sur l'autre le long d'une surface de jointure et bloqués l'un sur l'autre au moyen d'éléments d'immobilisation. Les deux éléments comportant chacun deux demi-paliers sont sensiblement symétriques par rapport au plan médian longitudinal de la bielle et la surface de jointure est essentiellement disposée dans ledit plan médian longitudinal. Au moins un élément d'immobilisation est situé sur le corps de la bielle entre la tête de bielle et le pied de bielle.

Il est décrit dans cette demande de brevet deux éléments disjoints, au moins à une de leurs extrêmités, côté pied de bielle et/ou côté tête de bielle, et présentant, par leur écartement, un degré de liberté de rotation l'un par rapport à l'autre autour de l'axe du pied de bielle et/ou de l'axe de tête de bielle.

De préférence, le pied de bielle est en forme de croissant ou de couronne ouverte, dégageant une partie de surface de l'axe du pied de bielle assurant une réduction de longueur de la bielle et une réduction de la distance entre l'axe de pied de bielle et le fond du piston associé à cet axe d'articulation.

Cette conception de pied ou de tête de bielle présente l'inconvénient de localiser les efforts de contact entre la bielle et les axes d'articulation dans un secteur angulaire relativement éloigné du plan médian de symétrie de la bielle. En conséquence, ces efforts de contact, normaux à l'alésage cylindrique du pied ou de tête de bielle engendrent des composantes perpendiculaires au plan médian de symétrie dont la résultante provoque une ouverture par déformation en flexion de chaque demi-palier de bielle. Cette déformation, bien que très faible, provoque des micro-déplacements entre axes d'articulation et demi-paliers de bielle qui conduit à la dégradation des axes par l'apparition d'un phénomène dit de "fretting" pouvant être nuisible à la bonne tenue des axes, et générateur de bruit.

L'invention a pour but de proposer une bielle, notamment de moteur à combustion interne, qui, en fonctionnement, ne présente plus l'effet d'écartement par déformation en flexion de chaque demi-palier.

Elle a pour objet une bielle qui se caractérise en ce que :
- la surface des demi-paliers du pied et/ou de tête de bielle, en contact avec l'axe d'articulation, comportent au moins une partie plane, située dans une zone de ladite surface de demi-paliers, la plus éloignée du corps de la bielle.

Les autres caractéristiques de l'invention sont :
- au moins, une partie plane est perpendiculaire au plan médian longitudinal de ladite bielle.

Dans une forme de l'invention, les extrémités des demi-paliers de pied et/ou de tête de bielle de chacun des éléments s'étendent au-delà du plan défini par la surface de jointure du corps de bielle.

Dans une autre forme de l'invention, les deux demi-paliers de pied et/ou de tête de bielle de chacun des éléments, sensiblement symétriques, forment chacun un arc inférieur à 180° et au moins une partie plane d'un demi-palier forme, avec au moins une partie plane de l'autre demi-palier, un angle entrant dans l'axe d'articulation dudit palier.

De manière générale :
- au moins une partie plane de chacun des demi-paliers sous-tend un demi-arc inférieur à 45° ;
- chaque demi-palier comporte au moins une gorge ménagée entre une partie plane et la surface cylindrique dudit demi-palier.

La description qui suit et les dessins annexés, le tout donné à titre d'exemple non limitatif, fera bien comprendre l'invention.

La figure 1 est une vue générale en perspective d'une bielle de l'art antérieur.

La figure 2 présente, en vue de face, une partie de la bielle dans un exemple de réalisation selon l'invention.

La figure 3 présente, en vue de face, une partie de la bielle dans un autre exemple de réalisation selon l'invention.

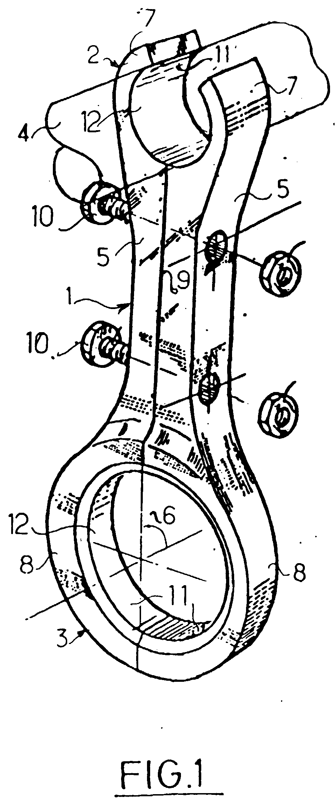

La figure 1 présente une bielle de l'art antérieur, notamment de moteur à combustion interne qui comporte un corps 1, un pied 2 de bielle et une tête 3 de bielle formant des paliers destinés, chacun, à recevoir un axe d'articulation 4 cylindrique, comme un axe de piston, représenté en traits fins sur la figure, ou un maneton de vilebrequin non représenté sur ladite figure. La bielle est constituée de deux éléments 5, symétriques par rapport à un plan médian longitudinal 6 de ladite bielle, les éléments 5, comportant à chacune de leur extrémité un demi-palier 7, 8.

La surface de jointure 9 des deux éléments 5, est essentiellement disposée dans le plan médian 6 et les éléments 5 sont liés entre eux par un moyen d'immobilisation ménagé sur le corps 1 de bielle entre le pied 2 et la tête 3 de bielle. Dans cet exemple de réalisation, le moyen d'immobilisation est constitué de boulons 10.

Cette bielle de l'art antérieur connu génère, en fonctionnement, des efforts de contact entre demi-paliers 7, 8, de bielle et axes d'articulation 4, localisés dans un secteur angulaire 11 de part et d'autre du plan de symétrie, dans une zone des paliers, la plus éloignée du corps 1. Ces efforts de contact normaux à la surface cylindrique 12 de l'alésage du palier engendrent des composantes perpendiculaires au plan médian 6 dont la résultante provoque un écartement par déformation en flexion de chacun des demi-paliers 7, 8 de bielle.

Cette déformation, bien que très faible, provoque des micro-déplacements entre axe d'articulation et paliers, ce qui conduit à l'apparition d'un phénomène de dégradation des surfaces appelé "fretting" nuisible à la bonne tenue de l'axe et générant du bruit.

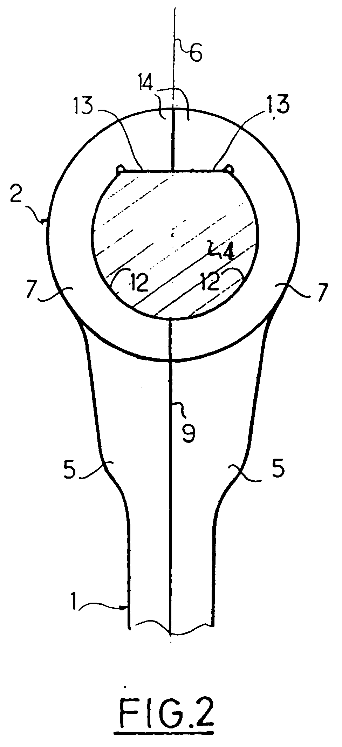

La figure 2, dans un exemple de réalisation de l'invention, présente une extrémité de bielle comportant un corps 1, un pied 2 de bielle formant un palier destiné à recevoir un axe d'articulation 4 comme par exemple un axe de piston.

La bielle est constituée de deux éléments 5, symétriques par rapport au plan médian 6 de la bielle, lesdits éléments 5, comportant deux demi-paliers 7, 8. Les demi-paliers 8 de tête de bielle ne sont pas représentés sur la figure.

Selon l'invention, la surface 12 de chacun des demi-paliers 7, 8 comporte une partie de surface plane 13 située dans une zone de ladite surface 12, la plus éloignée du corps 1.

La partie plane de chacun des demi-paliers soustend un demi-arc inférieur à 45°.

Lorsque les deux demi-paliers forment un arc de 180 °, la surface plane 13 est perpendiculaire au plan médian 6.

Sous cette forme de l'invention, et si la zone de contact de la partie plane est suffisamment importante, les efforts de contact entre l'axe de piston et les parties planes 13 des demi-paliers de bielle sont parallèles au plan médian 6 et à la surface de jointure 9 et, de ce fait, la composante perpendiculaire des efforts à ce plan est nulle.

La réalisation sur l'axe de piston d'un méplat dans cette zone d'efforts solidarise en rotation ledit axe avec le pied de bielle.

Il est également possible de réaliser des demi-paliers qui forment un arc de 180° par rapport au plan médian 6, de façon que les extrémités desdits paliers, par exemple de pied de bielle s'étendent au-delà du plan défini par la surface de jointure 9 du corps de bielle. Ainsi, à l'assemblage des deux éléments de bielle par le moyen d'immobilisation, les deux demi-paliers sont soumis à une précontrainte exercée par le contact en appui forcé de leur extrémité 14. Cette précontrainte évite ou réduit une éventuelle tendance à l'écartement des deux demi-paliers, tendance qui pourrait naître de la déformation sous charge appliquée aux demi-paliers par l'intermédiaire de la surface cylindrique des demi-paliers.

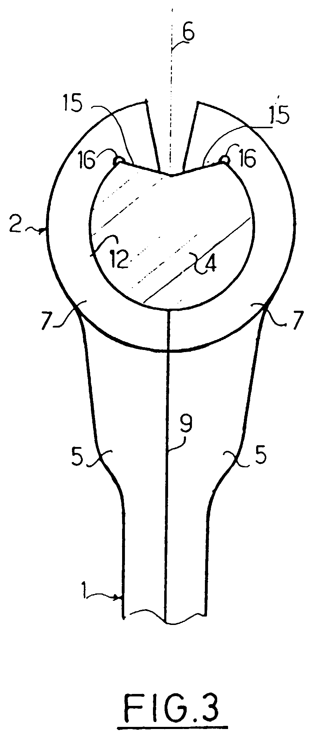

Dans une autre forme de l'invention, comme représentée sur la figure 3, les demi-paliers, par exemple, du pied de bielle de chacun des éléments 5, sensiblement symétriques, forment un arc inférieur à 180°, et une partie plane 15 d'un demi-palier forme, avec la partie plane 15 de l'autre demi-palier un angle entrant dans l'axe d'articulation 4.

Sous cette forme, on évite une éventuelle tendance à l'écartement des demi-paliers. En effet, selon l'invention, les efforts de contact entre axe de piston et les parties planes 15 des demi-paliers 7 de bielle génèrent une composante qui tend à refermer les deux demi-paliers.

Pour améliorer le comportement de l'assemblage, axe d'articulation 4, demi-paliers 7, 8, les demi-paliers comportent une gorge 16 ménagée entre la surface plane et la surface cylindrique desdits demi-paliers.

Cette gorge 16 de dégagement ou gorge de décharge de contraintes, au voisinage de l'intersection de la surface cylindrique 12 et la surface plane 13, 15, diminue le facteur local d'intensité des contraintes dû à l'accident de forme.

## Revendications

1. Bielle, notamment de moteur à combustion interne, comportant un corps (1), un pied (2) de bielle et une tête (3) de bielle, formant deux paliers, destinés, chacun, à recevoir un axe d'articulation, ladite bielle étant constituée de deux éléments (5), sensiblement symétriques par rapport à un plan médian (6) longitudinal de la bielle, leur surface de jointure (9) étant essentiellement disposée dans ledit plan médian (6), lesdits éléments (5) qui portent chacun un demi-palier (7) de pied de bielle, et un demi-palier (8) de tête de bielle, étant liés entre eux par au moins un moyen d'immobilisation ménagé sur le corps (1) de la bielle, caractérisée en ce que la surface des demi-paliers du pied et/ou de tête de bielle en contact avec l'axe d'articulation, comporte au moins une partie plane (13, 15) située dans une zone de ladite surface de demi-paliers, la plus éloignée du corps (1) de la bielle.

2. Bielle selon la revendication 1. caractérisée en ce qu'au moins une partie plane (13) est perpendiculaire au plan médian (6) longitudinal de ladite bielle.

3. Bielle selon les revendications 1 et 2, caractérisée en ce que les extrémités des demi-paliers de pied et/ou de tête de bielle de chacun des éléments (5) s'étendent au-delà du plan défini par la surface de jointure du corps (1) de bielle.

4. Bielle selon la revendication 1, caractérisée en ce que les deux demi-paliers (7, 8) de pied et/ou de tête de bielle de chacun des éléments (5), sensiblement symétriques, forment chacun un arc inférieur à 180° et en ce qu'au moins une partie plane (15) d'un demi-palier forme, avec au moins une partie plane (15) de l'autre demi-palier, un angle entrant dans l'axe d'articulation dudit palier.

5. Bielle selon les revendications 1 à 4, caractérisée en ce qu'au moins une partie plane de chacun des demi-paliers sous-tend un demi-arc inférieur à 45°.

6. Bielle selon les revendications 1 à 5, caractérisée en ce que chaque demi-palier (8, 9) comporte au moins une gorge (16) ménagée entre la partie plane (13, 15) et la surface cylindrique (12) dudit demi-palier.

## Patentansprüche

1. Pleuel, insbesondere für einen Verbrennungsmotor, der einen Körper (1), einen Pleuelfuß (2) und einen Pleuelkopf (3) aufweist, die zwei Lager bilden, welche jeweils dazu bestimmt sind, einen Gelenkbolzen aufzunehmen, wobei der Pleuel aus zwei Elementen (5) besteht, die in bezug auf eine Längsmittelebene (6) des Pleuels im wesentlichen symmetrisch sind und deren Fugenfläche (9) im wesentlichen in der Mittelebene (6) liegt, wobei diese Elemente (5), die jeweils ein Halblager (7) des Pleuelfußes und ein Halblager (8) des Pleuelkopfes tragen, durch wenigstens ein auf dem Pleuelkörper (1) vorgesehenes Verriegelungsmittel miteinander verbunden sind, dadurch gekennzeichnet daß die Oberfläche der Halblager des Pleuelfußes und/oder -kopfes, die mit dem Gelenkbolzen in Kontakt ist, wenigstens einen ebenen Teil (13, 15) aufweist, der sich in einer Zone dieser Oberfläche der Halblager befindet, die am weitesten von dem Körper (1) des Pleuels entfernt ist.

2. Pleuel nach Anspruch 1, dadurch gekennzeichnet, daß wenigstens ein ebener Teil (13) senkrecht zur Längsmittelebene (6) des Pleuels ist.

3. Pleuel nach Anspruch 1 und 2, dadurch gekennzeichnet, daß sich die Enden der Halblager des Pleuelfußes und/oder -kopfes jedes der Elemente (5) über die von der Fugenfläche des Pleuelkörpers (1) definierte Ebene hinaus erstrecken.

4. Pleuel nach Anspruch 1, dadurch gekennzeichnet, daß die zwei im wesentlichen symmetrischen Halblager (7, 8) des Pleuelfußes und/oder -kopfes jedes der Elemente (5) jeweils einen Bogen von weniger als 180° bilden und daß wenigstens ein ebener Teil (15) eines Halblagers mit wenigstens einem ebenen Teil (15) des anderen Halblagers einen Winkel bildet, der in den Gelenkbolzen des Lagers ragt.

5. Pleuel nach den Ansprüchen 1 bis 4, dadurch gekennzeichnet, daß wenigstens ein ebener Teil jedes Halblagers einen Halbbogen von weniger als 45° begrenzt.

6. Pleuel nach den Ansprüchen 1 bis 5, dadurch gekennzeichnet, daß jedes Halblager (7, 8) wenigstens eine Nut (16) aufweist, die zwischen dem ebenen Teil (13, 15) und der zylindrischen Oberfläche (12) dieses Halblagers vorgesehen ist.

## Claims

1. Connecting rod, especially for an internal combustion engine, including a shank (1), a connecting rod small end (2) and a connecting rod big end (3), forming two bearings, each intended to receive an articulation journal, the said connecting rod consisting of two elements (5) which are substantially symmetric with respect to a longitudinal mid-plane (6) of the connecting rod, their joining surface (9) being essentially located in the said mid-plane (6), said elements (5) which each bear a small end half-bearing (7) and a big end half-bearing (8) being joined together by at least one immobilizing means formed in the shank (1) of the connecting rod, characterized in that the surface of the small end and/or big end half-bearings in contact with the articulation journal includes at least one flat part (13, 15) situated in a region of the said half-bearing surface furthest from the shank (1) of the connecting rod.

2. Connecting rod according to Claim 1, characterized in that at least one flat part (13) is perpendicular to the longitudinal mid-plane (6) of the said connecting rod.

3. Connecting rod according to Claims 1 and 2, characterized in that the ends of the small end and/or big end half-bearings of each of the elements (5) extend beyond the plane defined by the joining surface of the connecting rod shank (1).

4. Connecting rod according to Claim 1, characterized in that the two small end and/or big end half-bearings (7, 8) of each of the substantially symmetric elements (5) each form an arc of less than 180° and in that at least one flat part (15) of one half-bearing forms, together with at least one flat part (15) of the other half-bearing, an angle which cuts into the articulation journal of the said bearing.

5. Connecting rod according to Claims 1 to 4, characterized in that at least one flat part of each of the half-bearings subtends a half-arc of less than 45°.

6. Connecting rod according to Claims 1 to 5, characterized in that each half-bearing (8, 9) includes at least one groove (16) formed between the flat part (13, 15) and the cylindrical surface (12) of the said half-bearing.
